# EUROPEAN PATENT SPECIFICATION

(11) **EP 1 382 256 B1**
(45) Date of publication and mention of the grant of the patent: **09.04.2008**
(21) Application number: 03250146.2
(22) Date of filing: 09.01.2003
(51) Int. Cl.: A21B 7/00

(54) **Bread maker and method of controlling the same**
Brotbackmaschine und zugehöriges Steuerverfahren
Machine de fabrication de pain et procédé de commande associé

(30) Priority: 19.07.2002 KR 2002042593
(43) Date of publication of application: 21.01.2004
(73) Proprietor: SAMSUNG ELECTRONICS CO., LTD., Suwon-city, Kyungki-do (KR)
(72) Inventor: Lee, Jang-woo, Suwon-city, Kyungki-do (KR); Kwon, Yong-hyun, Suwon city, Kyungki-do (KR); Lim, Dong-bin, Paldal-ku, Suwon city, Kyungki-do (KR)
(74) Representative: Clark, David James

(56) References cited:
- DE-A- 4 403 331
- US-A- 4 803 086
- US-A- 5 146 840
- US-A- 5 947 009
- PATENT ABSTRACTS OF JAPAN vol. 1999, no. 09, 30 July 1999 (1999-07-30) & JP 11 096448 A (FUJI ELECTRIC CO LTD), 9 April 1999 (1999-04-09)

## Description

The present invention relates to bread makers and to methods of controlling the same, and, more particularly, but not exclusively, to a bread maker and a method of controlling the same, in which an expiration date of a mixing bag is automatically checked to warn a user of the expiration of the contents of the mixing bag.

Generally, a bread maker automatically performs kneading, leavening, and baking of bread dough, and provides fresh bread to a user, so that a user only needs to put ingredients in the bread maker. Some bread makers use a mixing bag to make the bread. The mixing bag is made of a flexible material, and contains mixed ingredients such as flour, sugar, etc., for the bread. On the surface of the mixing bag is printed or applied a bar code that includes baking information on kneading time, leavening time and temperature, baking time and temperature, moisture, etc., and product information about the ingredients, such as an expiration date, etc.

The conventional bread maker that uses a mixing bag includes a pair of kneading drums that each has a holding part to hold the mixing bag, and a bar code reader behind one of the kneading drums to read the bar code. Opposite ends of the mixing bag are held by the holding parts of the kneading drums, and the mixing bag is wound on the kneading drums as the kneading drums are rotated. At this time, the bar code reader reads the bar code printed on, or applied to, the mixing bag, so that the baking information of the bar code is transmitted to the bread maker. Then, the bread maker automatically performs kneading, leavening, and baking of the dough, etc., according to the transmitted baking information. Thus, because it is easy and safe to use the bread maker and the mixing bag, a user, including children and older persons, can easily control the bread maker and safely make the bread.

However, the ingredients, such as flour contained in the mixing bag, may go bad if not used within a certain amount of time. Therefore, the expiration date of the mixing bag is specified, and a user must check the expiration date of the mixing bag before making the bread. However, a user is likely to carelessly forget to check the expiration date of the mixing bag. Further, if a user does not have the ability to read the expiration date of the mixing bag, such as illiterate children or older persons having poor eyesight, it is difficult to check the expiration date of the mixing bag.

JP 11 096448 A discloses an automatic vending machine capable of preventing articles whose taste appreciation term is expired from being sold while selling the articles within the taste appreciation term without burdening any labor and time on a user. The prevention of articles whose taste appreciation term is expired from being sold is achieved by a control part which comprises a central processing unit for controlling a valid term detection part, a comparison part and an article discharge part. The comparison part is provided with a clock function, compares the data of a valid term obtained as the result of reading a bar code attached to the article A by the valid term detection part 11 with the data of the present time obtained by the clock function and performs a processing for judging whether or not it is within the valid term. The control part 12 controls the article discharge part 14 corresponding to a judged result by the comparison part 13. Control is performed so as to discharge the article A to a take-out port 15 in the case that it is within the valid term and to discharge it to a valid time expired article housing part 16 in the case that the valid term is expired.

US-A-4 803 086 discloses apparatus for automatically making food products in piece form, such as loaves of bread, from dough-like substances, comprises a housing having holding drums adapted to be fixed to either end of a flexible sealable bag containing the ingredients. A dough preparation and baking chamber has upper and lower slit openings. The bag is moved to and fro through the slit openings to perform kneading of the dough, and then baked in the chamber. The variable baking parameters dependent upon the particular ingredients and product are controlled dependent upon instructions read from the bag by a scanner. The instructions comprise a bar code which can have a first identification portion to confirm that the bag is suitable for use in the apparatus and a second command portion to instruct the apparatus as to the baking sequence required. US-A-4 803 086 discloses the precharacterising features of claim 1 herein.

It is an aim of preferred embodiments of the present invention to provide a bread maker and a method of controlling the same, in which an expiration date of a mixing bag is automatically checked to warn a user of the expiration of the mixing bag.

It is another aim of preferred embodiments of the present invention to provide a bread maker and a method of controlling the same, in which an expired mixing bag is prevented from being used in making bread.

According to the present invention there is provided an apparatus and method as set forth in claims 1 or 6. Preferred features of the invention will be apparent from the dependent claims.

These together with other aspects and advantages which will be subsequently apparent, reside in the details of construction and operation as more fully hereinafter described and claimed, reference being had to the accompanying drawings forming a part thereof, wherein like numerals refer to like parts throughout.

The present invention will become apparent and more readily appreciated from the following description of the embodiments, by way of example only, taken in conjunction with the accompanying drawings, of which:
Figure 1 is a perspective view of a mixing bag and a bread maker according to an embodiment of the present invention;
Figure 2 is a sectional view of a part of the bread maker, taken along line I-I in Figure 1, which reads a bar code;
Figure 3 is a control block diagram of the bread maker according to the embodiment of the present invention;
Figure 4 is a control flowchart of the bread maker according to the embodiment of the present invention, in which the bar code is automatically read;
Figure 5 is a perspective view of a mixing bag and a bread maker according to another embodiment of the present invention; and
Figure 6 is a control flowchart of the bread maker according to the embodiment of the present invention, in which the bar code is manually read.

Hereinafter, embodiments of the present invention will be described in detail with reference to the attached drawings, wherein the like reference numerals refer to the like elements throughout. The present invention may, however, be embodied in many different forms and should not be construed as being limited to the embodiments set forth herein; rather, these embodiments are provided so that the present disclosure will be thorough and complete, and will fully convey the concept of the invention to those skilled in the art.

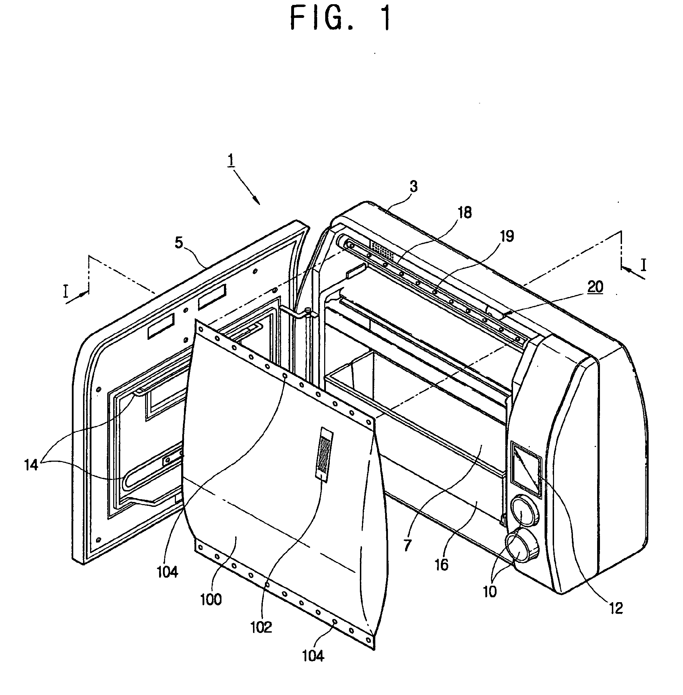

Figure 1 is a perspective view of a mixing bag and a bread maker according to an embodiment of the present invention. As shown therein, the bread maker 1 includes a main body 3 forming an oven compartment 7, and a door 5 opening and closing the front opening of the oven compartment 7. On the right front of the main body 3 are an operation selecting part 10 allowing a user to select an operation of the bread maker 1, and a display part 12 displaying an operating state of the bread maker 1. In the right rear of the main body 3 is a component compartment (not shown) accommodating a plurality of components for operating the bread maker 1. In the oven compartment 7 and the door 5 are a plurality of heaters 14 for heating the inside of the oven compartment 7 (the heaters 14 inside the oven compartment 7 are not shown). Inside the oven compartment 7 is a baking tray 16 to contain the dough.

At inner upper and lower parts of the oven compartment 7 are parallel kneading drums 18 (the lower kneading drum 18 is not shown). Each kneading drum 18 has a plurality of holding projections 19 protruding lengthwise therefrom and holding opposite ends of a mixing bag 100, so that the mixing bag 100 can be attached to the kneading drums 18. One of the kneading drums 18, particularly, the kneading drum 18 placed at the inner upper part of the oven compartment 7, is close to a bar code reader 20 that reads a bar code 102 printed on, or applied to, the mixing bag 100, which is held by the holding projections 19 of the kneading drums 18 and wound on the kneading drums 18.

The mixing bag 100 is held by the holding projections 19 of the kneading drums 18. The mixing bag 100 is made of a flexible material, and contains mixed ingredients such as flour, sugar, etc., for the bread. On the surface of the mixing bag 100 is printed or applied the bar code 102, which includes baking information on kneading time, leavening time and temperature, baking time and temperature, moisture, etc., and product information about the ingredients, such as an expiration date, etc. The opposite ends of the mixing bag 100 have a plurality of holding holes 104 that are placed on the holding projections 19 of the kneading drums 18, thereby attaching the mixing bag 100 to the kneading drums 18.

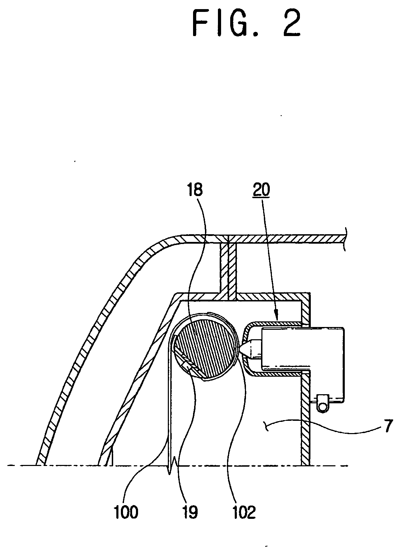

Figure 2 is a sectional view of a part of the bread maker that reads the bar code 102, taken along line I-I in Figure 1. As shown therein, to make the bread maker 1 read the bar code information, the mixing bag 100 is first attached to the kneading drums 18, and the kneading drums 18 are rotated in response to a user selection of the operation selecting part 10. As the kneading drums 18 are rotated, the mixing bag 100 is partially wound on the kneading drums 18, with the bar code 102 being in contact with an optical sensor (not shown) of the bar code reader 20, which is behind the upper kneading drum 18. Thus, the bar code reader 20 reads the bar code 102 printed on, or applied to, the mixing bag 100.

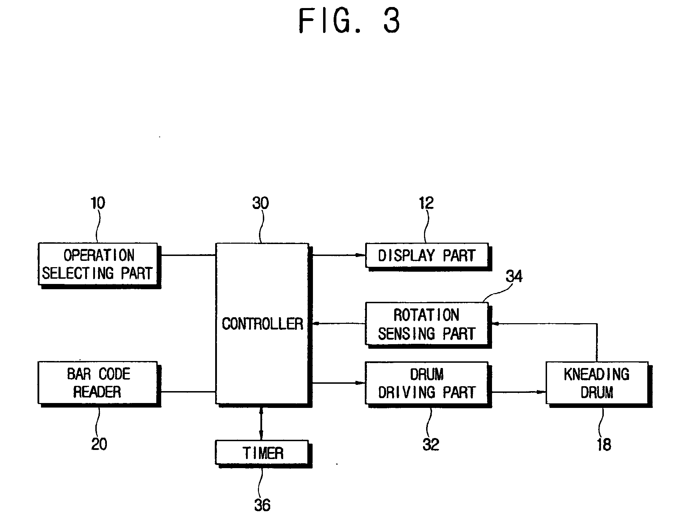

Figure 3 is a control block diagram of the bread maker 1. As shown therein, the operation selecting part 10 allows a user to select an operation of the bread maker 1. The display part 12 displays an operating state of the bread maker 1. The bar code reader 20 reads the bar code 102 on the mixing bag 100. A drum driving part 32 rotates the kneading drums 18. A rotation sensing part 34 senses rotation of the kneading drums 18. A timer 36 records the present time. A controller 30 controls the above components.

To read the bar code information, a user first selects an operation through the operation selecting part 10. The controller 30 controls the drum driving part 32 to rotate the kneading drums 18 by supplying electric power to a motor (not shown), thereby winding the mixing bag 100 on the kneading drums 18. As the mixing bag 100 is wound on the kneading drums 18, the bar code reader 20 reads the bar code 102 on the mixing bag 100. According to the baking information read by the bar code reader 20, the controller 30 controls the drum driving part 32 to drive the kneading drums 18 to knead the dough, and controls a heater driving part (not shown) to drive the heaters 14 to leaven and bake the dough.

The timer 36 records the present time, and transmits the time to the controller 30. An auxiliary power supply (not shown) such as a battery, etc., supplies electric power to the timer 36 to operate the timer 36 continuously, even when the bread maker 1 is turned off.

The controller 30 compares the expiration date of the mixing bag 100 read by the bar code reader 20 with the present time transmitted from the timer 36, thereby determining whether the mixing bag 100 has expired.

If the mixing bag 100 has expired, the controller 30 controls the display part 12 to display a warning message to warn the user of the expiration of the mixing bag 100. The warning of the expiration may be aurally achieved by a buzzer, etc. In this case, the bread maker 1 includes a sound circuit (not shown) and a speaker (not shown), and the controller 30 controls the sound circuit to make a buzzing sound through the speaker.

When the mixing bag 100 has expired, the controller 30 controls the drum driving part 32 to rotate the kneading drums 18 to unwind the mixing bag 100 from the kneading drums 18 and return the kneading drums 18 to an initial position, which is the position at which the mixing bag 100 is attached to the kneading drums 18. The kneading drums 18 are returned to the initial position based upon a rotated position of the kneading drums 18 sensed by the rotation sensing part 34. Hence, the expired mixing bag 100 is easily removed from the kneading drums 18.

After the kneading drums 18 have been returned to the initial position, the controller 30 cuts off the electric power supplied to the drum driving part 32, thereby preventing the drum driving part 32 from rotating the kneading drums 18. Hence, the kneading drums 18 stop kneading the dough contained in the expired mixing bag 100. Thus, the bread maker 1 discontinues the bread making process, thereby preventing spoiled ingredients from being made into the bread.

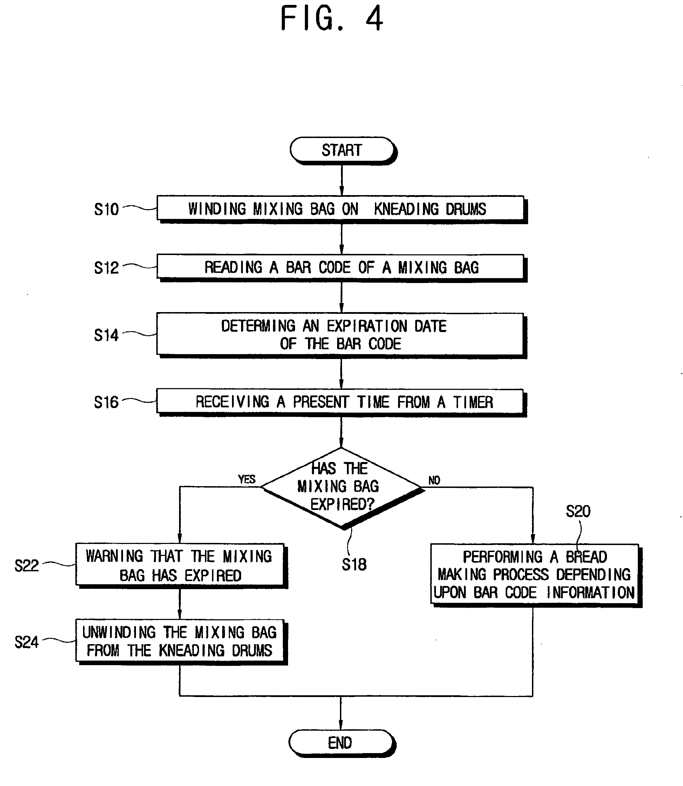

The bread maker 1 is controlled as follows. Referring to Figure 4, first, the mixing bag 100 is attached to and wound on the kneading drums 18 (S10). Then, the bar code reader 20 reads the bar code 102 on the mixing bag 100, and transmits the bar code information to the controller 30 (S12). The controller 30 determines the expiration date of the mixing bag 100 from the bar code information (S14). The controller 30 receives the present time from the timer 36 (S16). Thereafter, the controller 30 compares the expiration date of the mixing bag 100 with the present time transmitted from the timer 36, thereby determining whether the mixing bag 100 has expired (S18). When it is determined that the mixing bag 100 has not expired, the controller 30 controls the kneading drums 18 and the heaters 14 to perform the bread making process according to the baking information (S20).

However, when it is determined that the mixing bag 100 has expired, the controller 30 controls the display part 12 to display a warning message to warn the user of the expiration of the mixing bag 100 (S22). Simultaneously, the controller 30 controls the drum driving part 32 to rotate the kneading drums 18 in a direction that unwinds the mixing bag 100 from the kneading drums 18, thereby allowing the mixing bag 100 to be easily removed from the kneading drums 18 (S24). Thus, the bread maker 1 stops the expired mixing bag 100 from being kneaded, so that the bread making process is discontinued.

When it is determined that the mixing bag 100 has expired, the mixing bag 100 is unwound from the kneading drums 18. Also, the controller 30 cuts off the electric power supplied to the drum driving part 32, thereby preventing the drum driving part 32 from further rotating the kneading drums 18.

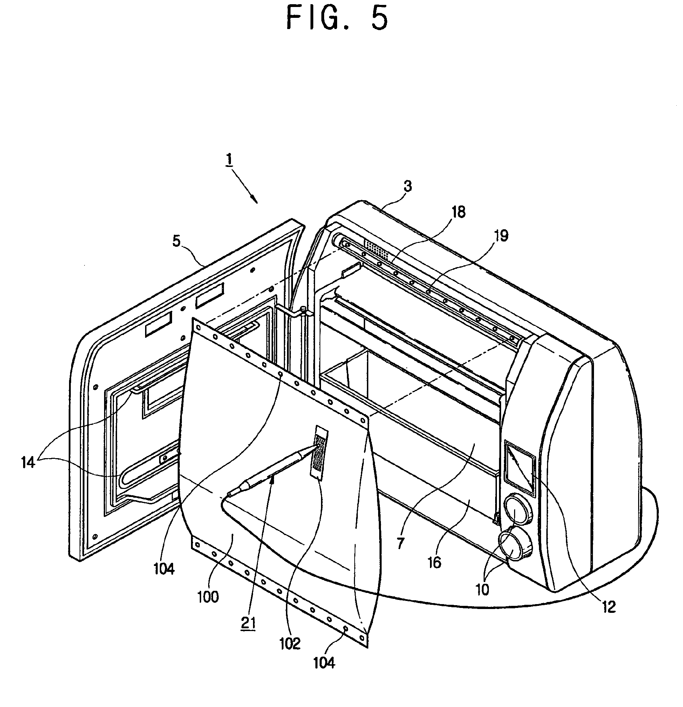

In the embodiment described above, the bar code reader 20 is placed near the upper kneading drum 18, and automatically reads the bar code 102 on the mixing bag 100. However, in another embodiment of the present invention, a handheld bar code reader 21 may be used to manually read the bar code 102, as shown in Figure 5.

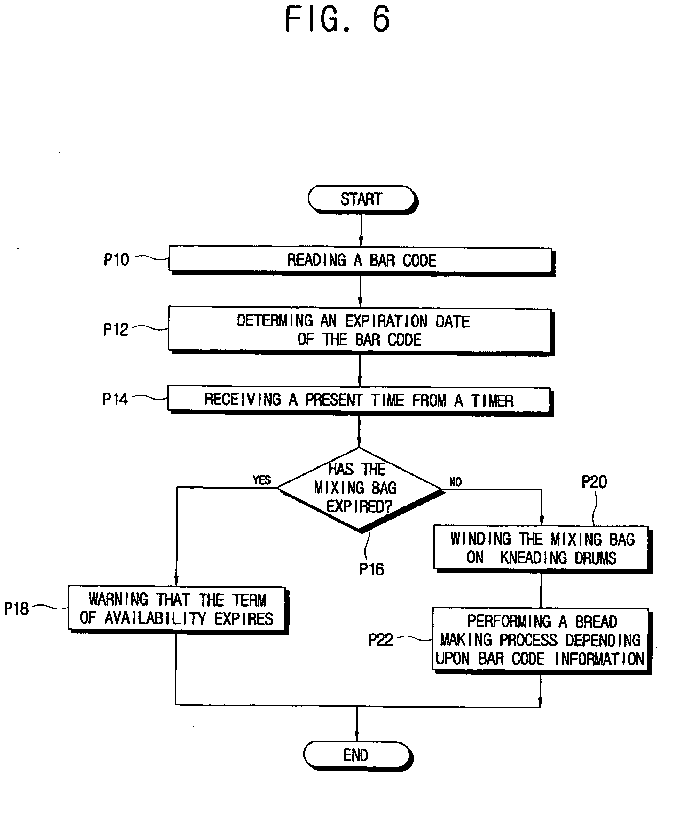

Figure 6 is a control flowchart of a bread maker according to the embodiment of the present invention in which the bar code 102 is manually read. As shown therein, first, a user inputs the bar code information to the controller 30 using a handheld bar code reader 21 that is electrically connected to the bread maker 2 (P10). Then, the controller 30 determines the expiration date of the mixing bag 100 from the bar code information (P12). The controller 30 receives the present time from the timer 36 (P14). Thereafter, the controller 30 compares the expiration date of the mixing bag 100 with the present time transmitted from the timer 36, thereby determining whether the mixing bag 100 has expired (P16).

When it is determined that the mixing bag 100 has not expired, the controller 30 controls the kneading drums 18 to wind the mixing bag 100 thereon to knead the dough (P20), and controls the kneading drums 18 and the heaters 14 to perform the bread making process on the basis of the baking information (P22).

Oppositely, when it is determined that the mixing bag 100 has expired, the controller 30 controls the display part 12 to display a warning message to warn a user of the expiration of the mixing bag 100 (P18) and discontinues the bread making process. That is, even though the user selects the operation selection part 10 to rotate the kneading drums 18, the controller 30 prevents the kneading drums 18 from rotating, so that the mixing bag 100 cannot be wound on the kneading drums 18. Hence, it is impossible to perform the bread making process. The controller 30 discontinues the bread making process until new bar code information on a new mixing bag 100 indicates the new mixing bag 100 has not expired, so that the expired mixing bag 100 is prevented from being used in making bread.

In the embodiments of the present invention described above, the display part 12 displays the warning message to warn the user of the expiration of the mixing bag 100. However, the warning of the expiration may be aurally achieved by using a buzzer, etc.

As described above, according to these embodiments of the present invention, the bread maker 1, 2 determines whether the mixing bag 100 has expired on the basis of the expiration date provided on the bar code 102 on the mixing bag 100. When the mixing bag 100 has expired, the bread maker 1, 2 prevents the bread making process from being performed and automatically returns the kneading drums 18 to the initial position by rotating the kneading drums 18 in a direction that unwinds the mixing bag 100 from the kneading drums 18, allowing the user to easily remove the expired mixing bag 100 from the kneading drums 18 so that the expired mixing bag 100 is prevented from being used in making bread.

As described above, these embodiments of the present invention provide a bread maker and a method of controlling the same, in which an expiration date of a mixing bag is automatically or manually checked to warn a user of the expiration of the mixing bag. Further, embodiments of the present invention provide a bread maker and a method of controlling the same, in which an expired mixing bag is prevented from being used in making bread.

Although a few embodiments of the present invention have been shown and described, it will be appreciated by those skilled in the art that changes may be made in these embodiments without departing from the scope defined in the appended claims.

## Claims

1. A bread maker (1), comprising:
a main body (3) forming an oven compartment (7);
a pair of kneading drums (18) spaced apart from each other inside the oven compartment (7), each kneading drum (18) having a holding part (19) for holding opposite ends of a mixing bag (100) containing ingredients for bread;
a drum driving part (32) that rotates the kneading drums (18) to wind the mixing bag (100) on the kneading drums (18);
a bar code reader (20, 21) reading a bar code (102) printed on, or applied to, the mixing bag (100) to obtain bar code information;
**characterized by**:
a timer (36) recording a present time;
a rotation sensing part (34) that senses rotation of the kneading drums (18); and
a controller (30) to control the rotation of the kneading drums (18) according to their sensed position, to determining whether the mixing bag (100) has expired by comparing an expiration date of the mixing bag (100) obtained from the bar code information with the present time transmitted from the timer (36), and to warn a user when the mixing bag (100) is determined to be expired by displaying a warning message, and rotating the kneading drums (18) to unwind the mixing bag (100) therefrom and return the kneading drums (18) to the initial position based upon the sensed rotation, and preventing further rotation of the kneading drums (18) to allow the user to easily remove the expired mixing bag (100) from the kneading drums (18) so that the expired mixing bag (100) is prevented from being used in making bread; and
to control the kneading drums (18), when the mixing bag (100) is determined not to be expired, to knead the dough according to the bar code information.

2. The bread maker (1) according to claim 1, further comprising a display part (12) on the main body (3), wherein the controller (30) controls the display part (12) to display the expiration of the mixing bag (100) when the mixing bag (100) is determined to be expired.

3. The bread maker (1) according to any preceding claim, wherein the kneading drums (18) comprise an upper kneading drum and a lower kneading drum, and the bar code reader (20) is placed within the bread maker (1) near the upper kneading drum.

4. The bread maker (1) according to any preceding claim, wherein the bar code (102) is manually read using a handheld bar code reader (21).

5. The bread maker (1) according to any preceding claim, wherein the warning of the expiration is an audio warning.

6. A method of controlling a bread maker (1) having a main (3) body forming an oven compartment (7), and a pair of kneading drums (18) spaced apart from each other inside the oven compartment (7), each kneading drum (18) having a holding part (19) holding opposite ends of a mixing bag (100) containing ingredients for bread, the bread maker **characterized by** a controller (30) that can determine whether or not the mixing bag (100) has expired, the method comprising:
attaching the mixing bag (100) to the kneading drums (18) positioned at an initial position, and rotating the kneading drums (18) to wind the mixing bag (100) on the kneading drums (18);
sensing rotation of the kneading drums (18);
reading an expiration date in a bar code (102) printed on, or applied to, the mixing bag (100);
determining a current date, and comparing the expiration date with the current date to determine whether the mixing bag (100) has expired;
determining whether the mixing bag (100) has expired according to the read expiration date;
warning a user of expiration of the mixing bag when the mixing bag is determined to be expired by displaying a warning message, and rotating the kneading drums (18) to unwind the mixing bag (100) therefrom and return the kneading drums (18) to the initial position based upon the sensed rotation, and preventing further rotation of the kneading drums (18) to allow the user to easily remove the expired mixing bag (100) from the kneading drums (18) so that the expired mixing bag (100) is prevented from being used in making bread; and
controlling the kneading drums (18), when the mixing bag (100) is determined not to be expired, to knead the dough according to the bar code information.

7. The method according to claim 6, further comprising rotating the kneading drums (18) in a direction that unwinds the mixing bag (100) from the kneading drums (18) when the mixing bag (100) is determined to be expired.

8. The method according to claim 6 or claim 7, further comprising stopping the kneading drums (18) from rotating when the mixing bag (100) is determined to be expired.

9. The method according to any one of claims 6-8, wherein the warning of the expiration is an audio warning.

10. The method according to any one of claims 6-9, wherein the expiration date is read by a bar code reader (20) placed within the bread maker (1) near an upper one of the kneading drums (18).

11. The method according to any one of claims 6-10, wherein the bar code (102) is manually read using a handheld bar code reader (21).

## Patentansprüche

1. Brotbackmaschine (1), enthaltend:
einen Grundkörper (3), der eine Ofenkammer (7) ausbildet;
ein Paar Knettrommeln (18), die in gegenseitigem Abstand in der Ofenkammer (7) angeordnet sind und jeweils einen Halteteil (19) zum Festhalten gegenüberliegender Enden eines Brotzutaten enthaltenden Mischbeutels (100) aufweisen;
einen Trommelantriebsteil (32), das die Knettrommeln (18) dreht, um den Mischbeutel (100) auf die Knettrommeln (18) aufzuwickeln;
einen Streifenkodeleser (20,21), der einen auf den Mischbeutel (100) aufgedruckten oder daran angebrachten Streifenkode (102) liest, um Streifenkodeinformation zu erhalten;
**gekennzeichnet durch**:
einen Zeitgeber (31), der eine Augenblickszeit aufzeichnet;
einen Drehungssensorteil (34), das die Drehung der Knettrommeln (18) erfasst; und
eine Steuereinheit (30) zum Steuern der Drehung der Knettrommeln (18) entsprechend ihrer erfassten Stellung, zum Ermitteln, ob der Mischbeutel (100) abgelaufen ist, **durch** Vergleichen eines aus der Streifenkodeinformation erhaltenen Ablaufdatums des Mischbeutels (100) mit der vom Zeitgeber (36) übermittelten Augenblickszeit, und zum Warnen eines Benutzers **durch** Anzeigen einer Warnmitteilung, wenn sich erwiesen hat, dass der Mischbeutel (100) abgelaufen ist, und zum Drehen der Knettrommeln (18) zum Abwickeln des Mischbeutels (100) davon und Rückführen der Knettrommeln (18) in ihre Ausgangsstellung auf der Grundlage der erfassten Drehung und zum Verhindern einer Weiterdrehung der Knettrommeln (18), um es dem Benutzer zu ermöglichen, den abgelaufenen Mischbeutel (100) von den Knettrommeln (18) einfach abzunehmen, so dass verhindert wird, dass der abgelaufene Mischbeutel (100) bei der Brotherstellung verwendet wird; und
zum Steuern der Knettrommeln (18), wenn sich ergeben hat, dass der Mischbeutel (100) nicht abgelaufen ist, um den Teig entsprechend der Streifenkodeinformation zu kneten.

2. Brotbackmaschine (1) nach Anspruch 1, weiterhin enthaltend einen Anzeigeteil (12) am Grundkörper (3), wobei die Steuereinheit (30) den Anzeigeteil (12) so steuert, dass der Ablauf des Mischbeutels (100) angezeigt wird, wenn der Mischbeutel (100) als abgelaufen ermittelt worden ist.

3. Brotbackmaschine (1) nach einem der vorhergehenden Ansprüche, bei der die Knettrommeln (18) eine obere und eine untere Knettrommel enthalten und der Streifenkodeleser (20) innerhalb der Brotbackmaschine (1) nahe der oberen Knettrommel angeordnet ist.

4. Brotbackmaschine (1) nach einem der vorhergehenden Ansprüche, bei der der Streifenkode (100) unter Verwendung eines handgehaltenen Streifenkodelesers (21) von Hand gelesen wird.

5. Brotbackmaschine (1) nach einem der vorhergehenden Ansprüche, bei der die Warnung über den Ablauf eine akustische Warnung ist.

6. Verfahren zum Steuern einer Brotbackmaschine (1), die einen eine Ofenkammer (7) ausbildenden Grundkörper (3) und ein Paar im Abstand zueinander innerhalb der Ofenkammer (7) angeordneter Knettrommeln (18) aufweist, wobei jede Knettrommel (18) einen Halteteil (19) hat, der entgegengesetzte Enden eines Brotzutaten enthaltenden Mischbeutels (100) hält, und die Brotbackmaschine durch eine Steuereinheit (30) **gekennzeichnet** ist, die ermitteln kann, ob der Mischbeutel (100) abgelaufen ist, oder nicht, umfassend:
Anbringen des Mischbeutels (100) an den Knettrommeln (18), die in einer Anfangsstellung angeordnet sind, und Drehen der Knettrommeln (18), um den Mischbeutel (100) auf die Knettrommeln (18) aufzuwickeln;
Erfassen der Drehung der Knettrommeln (18);
Auslesen eines in einem Streifenkode (102) enthaltenen Ablaufdatums, der auf den Mischbeutel (100) aufgedruckt oder daran angebracht ist;
Ermitteln eines aktuellen Datums und Vergleichen des Abalufdatums mit dem aktuellen Datum, um zu ermitteln, ob der Mischbeutel (100) abgelaufen ist;
Ermitteln, ob der Mischbeutel (100) abgelaufen ist, aus dem abgelesenen Ablaufdatum;
Warnen eines Benutzers über den Abaluf des Mischbeutels, wenn ermittelt wird, dass der Mischbeutel abgelaufen ist, durch Anzeigen einer Warnmitteilung, und Drehen der Knettrommeln (18), um den Mischbeutel (100) davon abzuwickeln, und Rückführen der Knettrommeln (18) in die Anfangsstellung auf der Grundlage der erfassten Drehung, und Verhindern einer Weiterdrehung der Knettrommeln (18), um es dem Benutzer zu ermöglichen, den abgelaufenen Mischbeutel von den Knettrommeln (18) einfach abzunehmen, so dass verhindert wird, dass der abgelaufene Mischbeutel (100) bei der Brotherstellung verwendet wird; und
Steuern der Knettrommeln (18), wenn ermittelt worden ist, dass der Mischbeutel (100) nicht abgelaufen ist, um den Teig entsprechend der Streifenkodeinformation zu kneten.

7. Verfahren nach Anspruch 6, ferner enthaltend das Drehen der Knettrommeln (18) in einer Richtung, die den Mischbeutel (100) von den Knettrommeln (18) abwickelt, wenn ermittelt wird, dass der Mischbeutel (100) abgelaufen ist.

8. Verfahren nach Anspruch 6 oder 7, weiterhin enthaltend das Anhalten der Knettrommeln (18) aus der Drehung, wenn ermittelt ist, dass der Mischbeutel (100) abgelaufen ist.

9. Verfahren nach einem der Ansprüche 6 bis 8, bei der die Warnung über den Ablauf eine akustische Warnung ist.

10. Verfahren nach einem der Ansprüche 6 bis 9, bei dem das Ablaufdatum durch einen Streifenkodeleser (20) ausgelesen wird, der innerhalb der Brotbackmaschine (1) nahe einer oberen der Knettrommeln (18) angeordnet ist.

11. Verfahren nach einem der Ansprüche 6 bis 10, bei der der Streifenkode (102) unter Verwendung eines handgehaltenen Streifenkodelesers (21) von Hand gelesen wird.

## Revendications

1. Machine à pain (1), comprenant :
un corps principal (3) formant un compartiment de four (7) ;
une paire de tambours de malaxage (18) espacés l'un de l'autre à l'intérieur du compartiment de four (7), chaque tambour de malaxage (18) comportant une pièce de maintien (19) pour le maintien des extrémités opposées d'un sac de mélange (100) contenant des ingrédients pour le pain ;
une pièce d'entraînement de tambour (32) qui met en rotation les tambours de malaxage (18) pour enrouler le sac de mélange (100) sur les tambours de malaxage (18) ;
un lecteur de code-barres (20, 21) lisant un code-barres (102) imprimé ou appliqué sur le sac de mélange (100) pour obtenir les informations de code-barres ;
**caractérisé par** :
une minuterie (36) enregistrant l'heure actuelle ;
une pièce de détection de la rotation (34) qui détecte la rotation des tambours de malaxage (18) ; et
un contrôleur (30) pour contrôler la rotation des tambours de malaxage (18) selon leur position détectée, pour déterminer si le sac de mélange (100) a expiré en comparant une date d'expiration du sac de mélange (100) obtenue à partir des informations du code-barres avec l'heure actuelle transmise par la minuterie (36), et pour avertir un utilisateur quand il est déterminé que le sac de mélange (100) a expiré en affichant un message d'avertissement, et mettre en rotation les tambours de malaxage (18) pour dérouler le sac de mélange (100) de ceux-ci et remettre les tambours de malaxage (18) dans la position initiale sur la base de la rotation détectée, eL empêcher la rotation ultérieure des tambours de malaxage (18) pour permettre à l'utilisateur de retirer facilement le sac de mélange (100) expiré des tambours de malaxage (18), de telle sorte que le sac de mélange (100) expiré ne puisse pas être utilisé pour faire du pain ; et
pour contrôler les tambours de malaxage (18), quand il est déterminé que le sac de mélange (100) n'a pas expiré, pour malaxer la pâte selon les informations du code-barres.

2. Machine à pain (1) selon la revendication 1, comprenant également une partie d'affichage (12) sur le corps principal (3), dans laquelle le contrôleur (30) contrôle la partie d'affichage (12) pour afficher l'expiration du sac de mélange (100) quand il est déterminé que le sac de mélange (100) a expiré.

3. Machine à pain (1) selon l'une quelconque des revendications précédentes, dans laquelle les tambours de malaxage (18) comprennent un tambour de malaxage supérieur et un tambour de malaxage inférieur, et le lecteur de code-barres (20) est placé dans la machine à pain (1) près du tambour de malaxage supérieur.

4. Machine à pain (1) selon l'une quelconque des revendications précédentes, dans laquelle le code-barres (102) est lu manuellement en utilisant un lecteur de code-barres portatif (21).

5. Machine à pain (1) selon l'une quelconque des revendications précédentes, dans laquelle l'avertissement de l'expiration est un avertissement audio.

6. Procédé de contrôle d'une machine à pain (1) comprenant un corps principal (3) formant un compartiment de four (7), et une paire de tambours de malaxage (18) espacés l'un de l'autre à l'intérieur du compartiment de four (7), chaque tambour de malaxage (18) comprenant une pièce de maintien (19) maintenant les extrémités opposées d'un sac de mélange (100) contenant des ingrédients pour le pain, la machine à pain étant **caractérisée par** un contrôleur (30) qui peut déterminer si le sac de mélange (100) a expiré ou pas, le procédé comprenant :
la fixation du sac de mélange (100) aux tambours de malaxage (18) positionnés dans une position initiale, et
la mise en rotation des tambours de malaxage (18) pour enrouler le sac de mélange (100) sur les tambours de malaxage (18) ;
la détection de la rotation des tambours de malaxage (18) ;
la lecture d'une date d'expiration dans un code-barres (102) imprimé ou appliqué sur le sac de mélange (100) ;
la détermination d'une date courante, et la comparaison de la date d'expiration avec la date courante pour déterminer si le sac de mélange (100) a expiré ;
la détermination du fait que le sac de mélange (100) a expiré ou pas selon la date d'expiration lue ;
l'avertissement d'un utilisateur de l'expiration du sac de mélange quand il est déterminé que le sac de mélange a expiré en affichant un message d'avertissement, et la mise en rotation des tambours de malaxage (18) pour dérouler le sac de mélange (100) à partir de ceux-ci et remettre les tambours de malaxage (18) dans la position initiale sur la base de la rotation détectée, et empêcher la rotation ultérieure des tambours de malaxage (18) pour permettre à l'utilisateur de retirer facilement le sac de mélange (100) expiré des tambours de malaxage (18), de telle sorte que le sac de mélange (100) expiré ne puisse pas être utilisé pour la fabrication du pain ; et
le contrôle des tambours de malaxage (18), quand il est déterminé que le sac de mélange (100) n'a pas expiré, pour malaxer la pâte selon les informations du code-barres.

7. Procédé selon la revendication 6, comprenant également la mise en rotation des tambours de malaxage (18) dans une direction qui déroule le sac de mélange (100) des tambours de malaxage (18) quand il est déterminé que le sac de mélange (100) a expiré.

8. Procédé selon la revendication 6 ou la revendication 7, comprenant également l'arrêt des tambours de malaxage (18) de la mise en rotation quand il est déterminé que le sac de mélange (100) a expiré .

9. Procédé selon l'une quelconque des revendications 6 à 8, dans laquelle l'avertissement de l'expiration est un avertissement audio.

10. Procédé selon l'une quelconque des revendications 6 à 9, dans laquelle la date d'expiration est lue par un lecteur de code-barres (20) placé à l'intérieur de la machine à pain (1) près de l'un des tambours de malaxage supérieurs (18).

11. Procédé selon l'une quelconque des revendications 6 à 10, dans lequel le code-barres (102) est lu manuellement en utilisant un lecteur de code-barres portatif (21) .
